# EUROPEAN PATENT APPLICATION

(11) **EP 4 841 133 A1**
(43) Date of publication of application: **18.11.2026**
(21) Application number: 24916453.4
(22) Date of filing: 23.09.2024
(51) Int. Cl.: F16H 61/02, F16H 61/18

(54) **GEAR SHIFTING PROTECTION MECHANISM ACTIVATION METHOD, APPARATUS, AND DEVICE, AND STORAGE MEDIUM**

(30) Priority: 08.01.2024 CN 202410029326
(71) Applicant: Dongfeng Motor Group Co., Ltd, Wuhan, Hubei 430056 (CN)
(72) Inventor: ZHANG, Li, Wuhan, Hubei 430056 (CN); WU, Zhaosu, Wuhan, Hubei 430056 (CN); LIU, Hui, Wuhan, Hubei 430056 (CN); LI, Shicheng, Wuhan, Hubei 430056 (CN); WANG, Wei, Wuhan, Hubei 430056 (CN)
(74) Representative: Valet Patent Services Limited
(86) International application number: PCT/CN2024/120329
(87) International publication number: WO 2025/148401

(57) **Abstract**

A method, apparatus, and device for activating a gear shifting protection mechanism, and a storage medium. The method for activating a gear shifting protection mechanism includes: acquiring a Pulse Width Modulation signal of a gear shifting motor and a Hall signal of the gear shifting motor; respectively determining whether the Pulse Width Modulation signal and the Hall signal are valid; in a condition that both the Pulse Width Modulation signal and the Hall signal are valid, determining a first change value of an angular stroke of a gear shifting hub based on the Pulse Width Modulation signal, and determining a second change value of the angular stroke of the gear shifting hub based on the Hall signal; performing a first verification on a position of the gear shifting hub based on the first change value and the second change value, to obtain a first verification result; activating a first protection mechanism in a condition that the first verification result is unqualified; the first protection mechanism being used for a vehicle to turn off the gear shifting motor and cut off a power output of the vehicle.

## Description

### CROSS-REFERENCE TO RELATED APPLICATION

This application is based on, and claims the priority of Chinese patent application No. 202410029326.0, filed on January 08, 2024. The entire contents of the Chinese patent application are incorporated herein by reference.

### TECHNICAL FIELD

The invention relates to a field of vehicle control, and in particular to a method, apparatus, and device for activating a gear shifting protection mechanism, and a storage medium.

### BACKGROUND

In a related gear shifting technology, a gear shifting mechanism of a vehicle performs a gear shifting operation by comparing a difference between acquired electrical angle information of a Hall signal and electrical angle information of a Pulse Width Modulation (PWM) signal, with a threshold value. However, a gear shifting motor has forward and reverse rotation working conditions. After a rotational speed is rapidly switched between forward and reverse directions, there is a delay in a judgment of Hall direction, and an electrical angle obtained through a Hall signal has a large lag, and thus an angle deviation is erroneously accumulated, causing a deviation between the electrical angle information of the Hall signal and the electrical angle information of the PWM signal exceeding the threshold value. In addition, in a condition that the electrical angle information of the Hall signal or the electrical angle information of the PWM signal is incorrect, a verification is performed using a wrong signal, resulting in an unreliable position of a component in the gear shifting mechanism, which further leads to a gear shifting failure or error, and thus a hardware of gearbox is damage and an unintended acceleration or deceleration is caused.

### SUMMARY

In view of this, the invention provides a method, apparatus, and device for activating a gear shifting protection mechanism, and a storage medium.

The technical solution of the invention is implemented as follows:
In a first aspect, the invention provides an activation method for a gear shifting protection mechanism, the method including: acquiring a Pulse Width Modulation signal of a gear shifting motor and a Hall signal of the gear shifting motor; respectively determining whether the Pulse Width Modulation signal and the Hall signal are valid; in a condition that both the Pulse Width Modulation signal and the Hall signal are valid, determining a first change value of an angular stroke of a gear shifting hub based on the Pulse Width Modulation signal, and determining a second change value of the angular stroke of the gear shifting hub based on the Hall signal; performing a first verification on a position of the gear shifting hub based on the first change value and the second change value, to obtain a first verification result; activating a first protection mechanism in a condition that the first verification result is unqualified; the first protection mechanism being used for a vehicle to turn off the gear shifting motor and cut off a power output of the vehicle.

In a second aspect, the invention provides an apparatus for activating a gear shifting protection mechanism. The apparatus includes:
a first acquisition module, configured for acquiring a Pulse Width Modulation signal of a gear shifting motor and a Hall signal of the gear shifting motor;
a first judgment module, configured for judging whether the Pulse Width Modulation signal is valid and judging whether the Hall signal is valid, respectively.
a first determination module, configured for, in a condition that both the Pulse Width Modulation signal and the Hall signal are valid, determining a first change value of an angular stroke of a gear shifting hub based on the Pulse Width Modulation signal; and determining a second change value of the angular stroke of the gear shifting hub based on the Hall signal.
a first verification module, configured for performing, based on the first change value and the second change value, a first verification on a position of the gear shifting hub to obtain a first verification result.
a first activation module, configured for activating, in a condition that the first verification result is unqualified, a first protection mechanism; the first protection mechanism being used to turn off the gear shifting motor of a vehicle and cut off a power output of the vehicle.

In a third aspect, the invention provides a device for activating a gear shifting protection mechanism, including a memory and a controller. The memory stores a computer program executable on the controller. The controller, when executing the program, implements steps in the above method.

In a fourth aspect, the invention provides a computer-readable storage medium having a computer program stored thereon. The computer program, when executed by a processor, implements steps in the above method.

In the invention, on one hand, it is judged judging whether the Pulse Width Modulation signal of the gear shifting motor and the Hall signal of the gear shifting motor are valid, a gear shifting operation is performed in a condition that both the Pulse Width Modulation signal of the gear shifting motor and the Hall signal of the gear shifting motor are valid, and in this way, a gear shifting failure caused by using wrong signals for the gear shifting operation can be avoided and a reliability of gear shifting can be improved. On the other hand, during a gear shifting process, a position of a gear shifting hub is verified using a first change value and a second change value, and timely intervention and protection are provided upon a verification error, thereby effectively protecting a gear shifting mechanism and improving driving safety.

It should be understood that the above general description and the following detailed description are merely exemplary and explanatory, and do not limit the technical solutions of the invention.

### BRIEF DESCRIPTION OF DRAWINGS

In the drawings (which are not necessarily drawn to scale), similar reference numerals may describe similar components in different views. Similar reference numerals with different letter suffixes may represent different examples of similar components. The drawings generally illustrate, by way of example but not limitation, various embodiments discussed herein.
FIG. 1 is a first flowchart of a method for activating a gear shifting protection mechanism according to an embodiment of the invention;
FIG. 2 is a second flowchart of the method for activating a gear shifting protection mechanism according to an embodiment of the invention;
FIG. 3 is a third flowchart of the method for activating a gear shifting protection mechanism according to an embodiment of the invention;
FIG. 4 is a schematic diagram showing a relationship between a Hall signal and a PWM signal according to an embodiment of the invention;
FIG. 5 is a schematic diagram showing a composition structure of an apparatus for activating a gear shifting protection mechanism according to an embodiment of the invention; and
FIG. 6 is a schematic diagram showing a hardware entity of a device for activating a gear shifting protection mechanism according to an embodiment of the invention.

### DETAILED DESCRIPTION

Exemplary embodiments of the invention will be described in more detail below with reference to the accompanying drawings. Although the accompanying drawings show exemplary embodiments of the invention, it should be understood that the invention may be implemented in various forms and should not be limited to the specific embodiments set forth herein. On the contrary, these embodiments are provided to enable a more thorough understanding of the invention, and to fully convey the scope of the invention to those skilled in the art.

In the following description, numerous specific details are set forth to provide a more thorough understanding of the invention. However, it will be apparent to those skilled in the art that the invention may be practiced without one or more of these details. In other examples, some technical features well known in the art are not described in order to avoid confusion with the invention; that is, not all features of the actual embodiments are described herein, and well-known functions and structures are not described in detail.

It will be understood that, although the terms first, second, third, etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the invention. The discussion of a second element, component, region, layer or section does not imply that a first element, component, region, layer or section is necessarily present in the invention.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprise" and/or "include", when used in this specification, specify the presence of stated features, integers, steps, operations, elements, components and/or groups, but do not preclude the presence or addition of one or more other features, integers, steps, operations, elements, components and/or groups thereof. As used herein, the term "and/or" includes any and all combinations of the associated listed items.

A gear shifting mechanism of a vehicle includes a gear shifting mechanism and a gear shifting hub. A gear shifting motor and a gear shifting hub are two important components in a mechanical system. The gear shifting motor transmits a rotary motion to the gear shifting hub through a reducer and a transmission shaft, to drive the gear shifting hub to rotate, thereby completing a gear shifting operation.

The gear shifting motor includes a Pulse Width Modulation (PWM) signal and a Hall (HALL) signal. The PWM signal is a pulse signal with a variable duty cycle, and can adjust an average voltage value of the signal by controlling a pulse width. It should be noted that the PWM signal is a high-precision position signal in the embodiments of the invention. The Hall signal is a position signal of a sensor based on the Hall effect. An electrical angle information of Hall signal is obtained according to the Hall signal, and an electrical angle information of PWM signal is obtained according to the PWM signal.

However, in the related art, after a rotational speed of gear shifting motor is rapidly switched between forward and reverse directions, there is a delay in a judgment of Hall direction, and an electrical angle of Hall signal has a large lag, and thus an angle deviation is erroneously accumulated, causing a deviation between the electrical angle information of the Hall signal and the electrical angle information of the PWM signal exceeding the threshold value. In addition, in a condition that the electrical angle information of the Hall signal or the electrical angle information of the PWM signal is incorrect, a verification is performed using a wrong signal, resulting in an unreliable position of the gear shifting motor, which further leads to a gear shifting failure or error, thereby damaging a hardware of gearbox and causing an unintended acceleration or deceleration.

Based on this, a method for activating a gear shifting protection mechanism is provided according to an embodiment of the invention. On one hand, it is judged whether the Pulse Width Modulation signal of the gear shifting motor and the Hall signal of the gear shifting motor are valid , and a gear shifting operation is performed in a condition that both the Pulse Width Modulation signal of the gear shifting motor and the Hall signal of the gear shifting motor are valid, and in this way, a gear shifting failure caused by using wrong signals for the gear shifting operation can be avoided and a reliability of gear shifting can be improved. On the other hand, during a gear shifting process, a position of a gear shifting hub is verified using a first change value and a second change value, and timely intervention and protection are provided upon a verification error, thereby effectively protecting a gear shifting mechanism and improving driving safety.

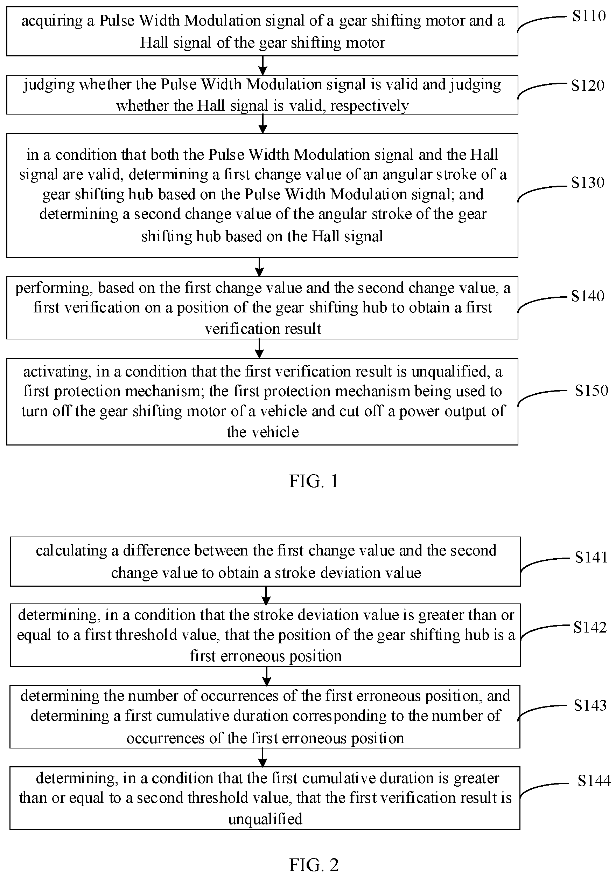

An embodiment of the invention provides a method for activating a gear shifting protection mechanism. As shown in FIG. 1, the method includes the following steps S110 to S150.

In Step S110, a Pulse Width Modulation signal of a gear shifting motor and a Hall signal of the gear shifting motor are acquired.

Here, the Pulse Width Modulation signal may be a signal generated by comparing an analog control signal with a fixed voltage; or a PWM module integrated inside a chip may directly output the PWM signal. The Hall signal is a signal generated by a Hall sensor on the gear shifting motor using the Hall effect.

In Step S120, whether the Pulse Width Modulation signal is valid is judged and whether the Hall signal is valid is judged, respectively.

In some embodiments, judging whether a signal is valid is essentially judging whether an error occurs in the signal. If no error occurs in the signal, the signal is considered valid; if an error occurs, the signal is considered invalid. Optionally, the judging whether the PWM signal is valid may be determined by diagnosing whether a carrier frequency signal is wrong; or may be determined by diagnosing whether a duty cycle signal is wrong; or may be jointly determined by combining the diagnosis of the carrier frequency signal and a duty cycle signal. This is not specifically limited in the embodiment of the invention.

In some embodiments, judging whether the Hall signal is valid may be determined by a phase sequence of the Hall signal; or may be determined by an encoding sequence of the Hall signal; or may be jointly determined by combining the phase sequence and the encoding sequence. This is not specifically limited in the embodiment of the invention.

In Step S 130, in a condition that both the Pulse Width Modulation signal and the Hall signal are valid, a first change value of an angular stroke of a gear shifting hub is determined based on the Pulse Width Modulation signal; and a second change value of the angular stroke of the gear shifting hub is determined based on the Hall signal.

In some embodiments, a change value of the angular stroke of the gear shifting hub essentially is a change value of a position of the gear shifting hub. For example, a difference between the angle value of the gear shifting hub at moment t and the angle value of the gear shifting hub at moment t+1 is used as the first change value of the angular stroke of the gear shifting hub, that is, the change value of position of the gear shifting hub.

In some embodiments, a specific implementation manner of determining the first change value of the angular stroke of the gear shifting hub based on the PWM signal may be that the PWM signal is first sampled at a Hall edge to determine the PWM signal; and then an accumulated first change value of the angular stroke of the gear shifting hub is calculated according to the PWM signal. Optionally, the accumulated first change value of the angular stroke of the gear shifting hub calculated through the PWM signal is shown in the following formula (1):
$Δa 1 = \left|{c}_{lower}-{c}_{upper}\right|$ (1);

Where, *Δa*1 represents the first change value; c_{lower} represents an angle of the gear shifting hub corresponding to a time of a lower edge of the Hall signal; cᵤₚₚₑᵣ represents an angle of the gear shifting hub corresponding to a time of an upper edge of the Hall signal. Optionally, the lower edge refers to a falling edge of the Hall signal, i.e., a transition from a high level to a low level; the upper edge refers to a rising edge, i.e., a transition from a low level to a high level, and ∥ represents an absolute value symbol.

In another embodiment, the first change value may also be as shown in the following formula (2):
$Δa 1 = \left|{c}_{t}-{c}_{t + 1}\right|$ (2);

Where, ct represents an angle of the gear shifting hub corresponding to the Hall signal at moment t; and cₜ₊₁ represents an angle of the gear shifting hub corresponding to the Hall signal at moment t+1.

In some embodiments, the angles of the gear shifting hub in formula (1) and (2) are calculated as shown in the following formula (3):
$c = \left({p}_{0}+N∗{360}^{o}\right) \div r + q$ (3);

Where, c represents the angle of the gear shifting hub; p₀ represents an initial position of the gear shifting motor; * is a multiplication symbol; ÷ is a division symbol; N represents a count of turns of rotation of the gear shifting motor; 360° is an angle of one turn of rotation of the gear shifting motor; r is a speed ratio of the gear shifting hub; q is a zero point of the gear shifting motor. It should be noted that p₀, N and q can all be obtained from signals stored in a Non-Volatile Memory (NVM). q can also be determined through bench calibration, for example, q can be set to be 0.025 degrees. r can be determined by a structure between the gear shifting motor and the gear shifting hub, for example, r can be set to be 61.

In some embodiments, a specific implementation manner of determining the second change value of the angular stroke of the gear shifting hub based on the Hall signal may be that the Hall signal is sampled at the Hall edge to accumulate a stroke value, and an accumulated second change value of the angular stroke of the gear shifting hub calculated through the Hall signal is shown in the following formula (4):
$Δ a 2 = \left|{e}_{lower}-{e}_{upper}\right| \div i \div r$ (4);

Where, *Δ*a2 represents the second change value; e_{lower} represents the electrical angle of the Hall signal corresponding to a time of a lower edge of the Hall signal; eᵤₚₚₑᵣ represents the electrical angle of the Hall signal corresponding to a time of an upper edge of the Hall signal. Optionally, the upper edge refers to a falling edge of the Hall signal, i.e., a transition from a high level to a low level; the upper edge refers to a rising edge of the Hall signal, i.e., a transition from a low level to a high level; i represents a count of pole pairs in the gear shifting motor, for example, an N pole and an S pole in the gear shifting motor form a pair of pole pairs; and r is the speed ratio of the gear shifting hub.

It should be noted that the electrical angle of the Hall signal can be calculated according to a mechanical angle of rotation of the gear shifting motor, and the mechanical angle can be understood as the electrical angle of the PWM signal. A calculation of the electrical angle of the Hall signal is shown in the following formula (5):
$Electrical angle of Hall signal = i * 360 °$ (5);

Where, i represents a count of pole pairs; 360° is the mechanical angle of one turn of rotation of the gear shifting motor; and i can be preset according to actual requirements.

In another embodiment, the calculation of the second change value may also be as shown in the following formula (6):
$Δ a 2 = \left|{e}_{t}-{e}_{t + 1}\right| \div i \div r$ (6);

Where, et represents the electrical angle of the Hall signal corresponding to the Hall signal at moment t; and eₜ₊₁ represents the electrical angle of the Hall signal corresponding to the Hall signal at moment t+1.

In Step S140, based on the first change value and the second change value, a first verification on a position of the gear shifting hub is performed to obtain a first verification result.

In some embodiments, the first verification result may be a result of a dynamic verification. In the dynamic verification, in a condition that the position of the gear shifting hub meets gear shifting requirements, the verification result is qualified; in a condition that the position of the gear shifting hub does not meet the gear shifting requirements, the verification result is unqualified.

In Step S150, in a condition that the first verification result is unqualified, a first protection mechanism is activated; and the first protection mechanism is used to turn off the gear shifting motor of a vehicle and cut off a power output of the vehicle.

In some embodiments, in a condition that the position of the gear shifting hub does not meet the gear shifting requirements, the gear shifting needs to be stopped immediately. Therefore, the gear shifting motor needs to be turned off immediately, and a power of the entire vehicle is cut off, thereby effectively protecting a gear shifting mechanism.

In the embodiments of the invention, on one hand, it is judged whether the Pulse Width Modulation signal of the gear shifting motor and the Hall signal of the gear shifting motor are valid, a gear shifting operation is performed in a condition that both the Pulse Width Modulation signal of the gear shifting motor and the Hall signal of the gear shifting motor are valid, and in this way, a gear shifting failure caused by using wrong signals for the gear shifting operation can be avoided and a reliability of gear shifting can be improved. On the other hand, during a gear shifting process, a position of a gear shifting hub is verified using a first change value and a second change value, and timely intervention and protection are provided upon a verification error, thereby effectively protecting a gear shifting mechanism and improving driving safety.

In some embodiments, as shown in FIG. 2, step S140 may include the following steps S141 to S144.

In Step S141, a difference between the first change value and the second change value to obtain a stroke deviation value is calculated.

In Step S142, in a condition that the stroke deviation value is greater than or equal to a first threshold value, it is determined that the position of the gear shifting hub is a first erroneous position.

Here, the first threshold value may be given according to a whole vehicle test, for example, the first threshold value may be 0.2 degrees, where the calculation of the first threshold value is shown in the following formula (7):
$First threshold value = Electrical angle of PWM signal \div r$ (7);

Where, according to a whole vehicle test, the electrical angle of the PWM signal is 13 degrees, and the speed ratio of the gear shifting hub is 61, then the first threshold value is 0.2 degrees.

It should be understood that the first change value and the second change value are changes in the angle of the gear shifting hub calculated based on two different signals. Under normal circumstances, the stroke deviation value should be as small as possible to meet the gear shifting requirements, otherwise, the position of the gear shifting hub is determined to be an erroneous position.

In Step S143: a count of occurrences of the first erroneous position is determined, and a first cumulative duration corresponding to the count of occurrences of the first erroneous position is determined.

In some embodiments, each time the stroke deviation value is greater than or equal to the first threshold value, it indicates that an error has occurred once in the position of the gear shifting hub. Optionally, the count of occurrences of the first erroneous position may be calculated in a continuously increasing manner. For example, if the count of occurrences of the first erroneous position at the current moment is n times, and then the count of occurrences of the first erroneous position at the next moment is n+1 times. In an embodiment, within 500 milliseconds (ms), an error occurring every 100 ms is a continuous increment; if a first error occurs at the 100th ms and a second error occurs at the 300th ms, it is not the continuous increment, and the count of occurrences of the first erroneous position is cleared to be zero at this time. Of course, this is only one implementation manner in the embodiment of the invention, and the embodiment of the invention does not make a specific limitation.

In some embodiments, the first cumulative duration is determined as shown in the following formula (8):
${S}_{1} = {\int }_{0}^{n} \left(\frac{{15}^{o}}{m}\right) dn$ (8);

Where, ${S}_{1} = {\int }_{0}^{n} \left(\frac{{15}^{o}}{m}\right) dn$ is an integral formula; ∫ represents an integral symbol; S₁ represents the first cumulative duration; n represents a count of occurrences of the first erroneous position; m represents a rotational speed of the gear shifting motor; and 15° is a mechanical angle of rotation of the gear shifting motor. The first cumulative duration is obtained by integrating times of n occurrences of the first erroneous position. Of course, this is only one implementation manner of calculating the cumulative duration, and the embodiments of the invention are not limited thereto.

In Step S144, in a condition that the first cumulative duration is greater than or equal to a second threshold value, it is determined that the first verification result is unqualified.

In some embodiments, the second threshold value may be given according to a whole vehicle test, and for example, may be 200 ms.

In the embodiment of the invention, the occurrence of an error in the position of the gear shifting hub is determined by using the stroke deviation value, and then a verification result is determined as unqualified according to the count of occurrences of the error and the cumulative duration. In this way, the count of error occurrences and the cumulative duration are used to accurately judge whether the current conditions meet the gear shifting requirements to improve an accuracy of judgment, thereby avoiding a misjudgment that leads to an erroneous activation of the first protection mechanism.

In the embodiment of the invention, the change value of the angle of the gear shifting hub calculated through the Hall signal and the change value of the angle of the gear shifting hub calculated through the PWM signal are mutually verified, thereby increasing the reliability of gear shifting, avoiding a verification error caused by an accumulation of positional errors or by an unchanged upper and lower edges of the Hall signal when the gear shifting motor changes direction, and thus the reliability of verification can be increased.

In some embodiments, the method further includes the following steps S310 to S330.

In Step S310, in a condition that the Pulse Width Modulation signal and/or the Hall signal are invalid, a difference between a first angle value of the gear shifting hub at a first moment and a second angle value of the gear shifting hub at a second moment is determined; the first moment and the second moment being differed by one cycle.

Here, the first moment may be moment t, and the second moment may be moment t+T. The first angle value is the angle value of the gear shifting hub at moment t, and the second angle value is the angle value of the gear shifting hub at moment t+T.

It should be understood that in a condition that there is an erroneous signal in the Pulse Width Modulation signal and/or the Hall signal, no gear shifting will be performed, and the angle value of the gear shifting hub will basically not change.

In Step S320, based on the difference, a second verification on the position of the gear shifting hub is performed to obtain a second verification result.

In some embodiments, the second verification may be a static verification, and the second verification result may be a result of the static verification. In the static verification, if the position of the gear shifting hub does not meet a preset condition, the second verification result is unqualified; if the position of the gear shifting hub meets the preset condition, the second verification result is qualified.

In Step S330, in a condition that the second verification result is unqualified, a second protection mechanism is activated; and the second protection mechanism is used to make a vehicle turn off the gear shifting motor and make a gear shifting request no longer be sent.

In some embodiments, in a condition that an error occurs in the PWM signal and/or the Hall signal, it indicates that no gear shifting is performed. By verifying a change value of angle of the gear shifting hub, in a condition that the error in the position of the gear shifting hub is identified in advance, an intervention is performed in advance to activate a second protection mechanism. The gear shifting motor is turned off immediately. A gear shifting is prohibited, and the VECU no longer sends a gear shifting request, thereby protecting the gear shifting mechanism.

In some embodiments, the method further includes the following steps S410 to S430.

In Step S410, a gear shifting instruction sent by a Vehicle Electronic Control Unit of the vehicle is received; and the gear shifting instruction includes a target gear and a target angle value of the gear shifting hub.

In some embodiments, the Vehicle Electronic Control Unit (VECU) of the vehicle sends the gear shifting instruction to a Hybrid Transmission Control Unit (HTCU) of the vehicle, that is, the above gear shifting mechanism.

In Step S420, whether the target gear is the same as a current gear of the vehicle, and whether the target angle value of the gear shifting hub is the same as a current angle value of the gear shifting hub in the Hybrid Transmission Control Unit are respectively judged.

In Step S430, in a condition that the target gear is the same as the current gear and the target angle value of the gear shifting hub is the same as the current angle value of the gear shifting hub, the first angle value and the second angle value are acquired.

It should be understood that in a condition that the Pulse Width Modulation signal and/or the Hall signal are invalid, the second verification is triggered. However, before performing the second verification, it is necessary to verify the gear shifting instruction sent by the Vehicle Electronic Control Unit of the vehicle. The second verification is performed in a condition a verification condition are met. Optionally, the verification condition is that the target gear in the gear shifting instruction is the same as the current gear of the vehicle, and the target angle value of the gear shifting hub is the same as the current angle value of the gear shifting hub. That is, in a condition that the target gear in the gear shifting instruction is the same as the current gear of the vehicle, and the target angle value of the gear shifting hub is the same as the current angle value of the gear shifting hub, the first angle value and the second angle value are acquired; then a difference between the first angle value and the second angle value is calculated by using the first angle value and the second angle value for the second verification to obtain a second verification result. In a condition that the second verification result is unqualified, the second protection mechanism is activated.

In some embodiments, after the second verification is triggered, a gear shifting instruction received by the gear shifting system is verified, and a static verification is continued only in a condition that it is determined that the target gear is the same as the current gear and the target angle value of the gear shifting hub is the same as the current angle value of the gear shifting hub. In this way, as the static verification is prevented from being performed under erroneous conditions, and thus a damaging to the hardware of the gearbox can be prevented, and then an unintended acceleration or deceleration due to inaccurate verification result can be prevented .

In some embodiments, the implementation of step S320 may include the following steps S321 to S323.

In Step S321, in a condition that the difference is greater than or equal to a third threshold value, it is determined that the position of the gear shifting hub is a second erroneous position.

In some embodiments, the third threshold value may be set, according to actual requirements, for example, to be 1.8 degrees.

It should be understood that when no gear shifting is performed, under normal circumstances, the difference should be as small as possible to meet requirements, otherwise, the position of the gear shifting hub is determined to be an erroneous position.

In Step S322, a count of occurrences of the second erroneous position is determined, and a second cumulative duration corresponding to the count of occurrences of the second erroneous position is determined.

In some embodiments, each time the difference is greater than or equal to the third threshold value, it indicates that an error has occurred once in the position of the gear shifting hub. Optionally, a manner of calculating the count of occurrences of the second erroneous position may refer to a manner of calculating the count of occurrences of the first erroneous position in step S143 above, which will not be repeated here.

In some embodiments, the manner of determining the second cumulative duration may be that the second cumulative duration is calculated by using a cycle. For example, a count of occurrences of the second erroneous position is multiplied by the cycle T to obtain the second cumulative duration.

In Step S323, in a condition that the second cumulative duration is greater than or equal to a fourth threshold value, it is determined that the second verification result is unqualified.

In some embodiments, the fourth threshold value may be given according to a whole vehicle test, and for example, may be 500 ms.

In the embodiment of the invention, the occurrence of an error in the position of the gear shifting hub is determined by using the difference, and then a verification result is determined as unqualified according to the count of occurrences of the error and the cumulative duration. In this way, the count of error occurrences and the cumulative duration are used to accurately judge whether the current conditions meet the gear shifting requirements to improve an accuracy of judgment, thereby avoiding a misjudgment that leads to an erroneous activation of the second protection mechanism.

In some embodiments, an implementation of step S120 "the judging whether the Pulse Width Modulation signal is valid" may include the following steps S121 to S124:

In Step S121, parameter values of characteristic signals in the Pulse Width Modulation signal is determined; and the characteristic signals include a carrier frequency signal and/or a duty cycle signal.

In some embodiments, the parameter value of the carrier frequency signal is a carrier frequency. Optionally, an embodiment for determining the carrier frequency may include: a diagnosis module reads a PWM signal cycle value at a time interval of 25 microseconds (µs). The reason for reading at the time interval of 25 µs is to avoid false fault alarms caused by reading a zero value as much as possible. When the read PWM cycle value is a zero value, the carrier frequency is a default value of 1, and the default value may be 1555 Hertz (Hz). When the read PWM cycle value is a non-zero value, the carrier frequency is the reciprocal of the PWM cycle value. It should be noted that the vehicle uses a 5 Volt (V) supply voltage which is normal to enable a diagnosis. Of course, this is only one implementation manner of determining the carrier frequency, and there is no limitation thereto.

In another embodiment, the parameter value of the duty cycle signal is a duty cycle.

In some embodiments, when the carrier frequency of the PWM signal is abnormal, it indicates that the PWM signal is invalid. When the duty cycle of the PWM signal is abnormal, it indicates that the PWM signal is invalid.

In Step S122, based on a relationship between the parameter value and a corresponding preset threshold value, an erroneous Pulse Width Modulation signal is determined.

In some embodiments, when the parameter value is the carrier frequency, the corresponding preset threshold value may be determined according to the signal frequency characteristics and a whole vehicle test. For example, the first preset threshold value is 1400 Hz, and the second preset threshold value is 1700 Hz. If the carrier frequency is less than the first preset threshold value or greater than the second preset threshold value, it is determined that the carrier frequency is abnormal, and further the PWM signal is determined to be erroneous.

In another embodiment, when the parameter value is the duty cycle, the corresponding preset threshold value may be determined according to a signal range and a whole vehicle test. It should be noted that, since there is a random installation relationship between an initial position of the gear shifting hub and an angle of the gear shifting motor, if a certain initial position is exactly at a position of a maximum duty cycle, it may be caused a false failure report. Therefore, the diagnosis needs to be performed when the gear shifting motor has a rotational speed. A diagnosis is enabled when the 5V power supply is normal and the rotational speed of the gear shifting motor is > 0 revolutions per minute (rpm). For example, the third preset threshold value is 99.9%, and the fourth preset threshold value is 6.5%. If the duty cycle is greater than the third preset threshold value or less than the fourth preset threshold value, it is determined that the duty cycle is abnormal, and further the PWM signal is determined to be erroneous.

In Step S123, a count of occurrences of the erroneous Pulse Width Modulation signal is determined, and a third cumulative duration corresponding to the count of occurrences of the erroneous Pulse Width Modulation signal is determined.

In some embodiments, each time the carrier frequency is less than the first preset threshold value or greater than the second preset threshold value, it is determined that the PWM signal is an erroneous signal once. In other embodiments, each time the duty cycle is greater than the third preset threshold value or less than the fourth preset threshold value, it is determined that the PWM signal is an erroneous signal once. Optionally, a manner of calculating the count of occurrences of the erroneous Pulse Width Modulation signal may refer to a manner of calculating the count of occurrences of the first erroneous position in step S143 above, which will not be repeated here.

In Step S124, based on a relationship between the third cumulative duration and a fifth threshold value, whether the Pulse Width Modulation signal is valid is determined.

In some embodiments, the fifth threshold value may be given by a whole vehicle test, and for example, may be 500 ms.

In the embodiment of the invention, the validity of the PWM signal is judged by using the carrier frequency signal and the duty cycle signal, thereby avoiding an erroneous PWM signal caused by line faults and ensuring a correct input of signal for verification.

In some embodiments, the implementation of step S120 "the judging whether the Hall signal is valid" may include the following steps S125 to S128:

In Step S125, a phase and/or an encoding sequence of the Hall signal is acquired.

The phase refers to a high or low potential in the signal. For example, the Hall signal has a high potential 1 and a low potential 0. Generally, three Hall sensors are used to detect a position of the gear shifting motor. The phase of the Hall signal includes, but is not limited to 000, 111, 011, etc. Generally, the encoding sequence is 123 or 321.

In Step S126: based on the phase and/or the encoding sequence, an erroneous Hall signal is determined.

In some embodiments, a phase of 000 indicates that the signals output by the three Hall sensors have no change. A phase of 111 indicates that the signals output by the three Hall sensors have all been changed. At this time, it indicates that the Hall signal is an erroneous Hall signal; an erroneous encoding sequence indicates that the Hall signal is an erroneous Hall signal. It should be noted that at a time when judging the validity of the Hall signal, the vehicle uses a 5V supply voltage.

In Step S127, a count of occurrences of the erroneous Hall signal is determined, and a fourth cumulative duration corresponding to the count of occurrences of the erroneous Hall signal is determined.

In some embodiments, each time a phase of 000 or 111 occurs, or each time an erroneous encoding sequence occurs, then the count of occurrences of the erroneous Hall signal is incremented by 1. Optionally, a manner of calculating the count of occurrences of the erroneous Hall signal may refer to a manner of calculating the count of occurrences of the first erroneous position in step S143 above, which will not be repeated here.

In Step S128, whether the Hall signal is valid based on a relationship between the fourth cumulative duration and a sixth threshold value is determined.

In some embodiments, the sixth threshold value may be given by a whole vehicle test, and for example, may be 300 ms.

In the embodiment of the invention, the validity of the Hall signal is judged by using the phase and the encoding sequence of the Hall signal. In this way, an error of the Hall signal caused by line faults is avoided, and in turn the validity of the Hall signal is judged, such that a correct input of the signal for verification is ensured.

The method for activating a gear shifting protection mechanism provided by the embodiments of the invention is described in detail below in conjunction with a specific application scenario.

The embodiment of the invention relates to another method for activating a gear shifting protection mechanism. By performing a dynamic verification (i.e., the above first verification) and a static verification (i.e., the above second verification) on a position of a gear shifting hub, timely intervention and protection are provided upon a verification error, thereby effectively protecting a shifting mechanism and improving driving safety.

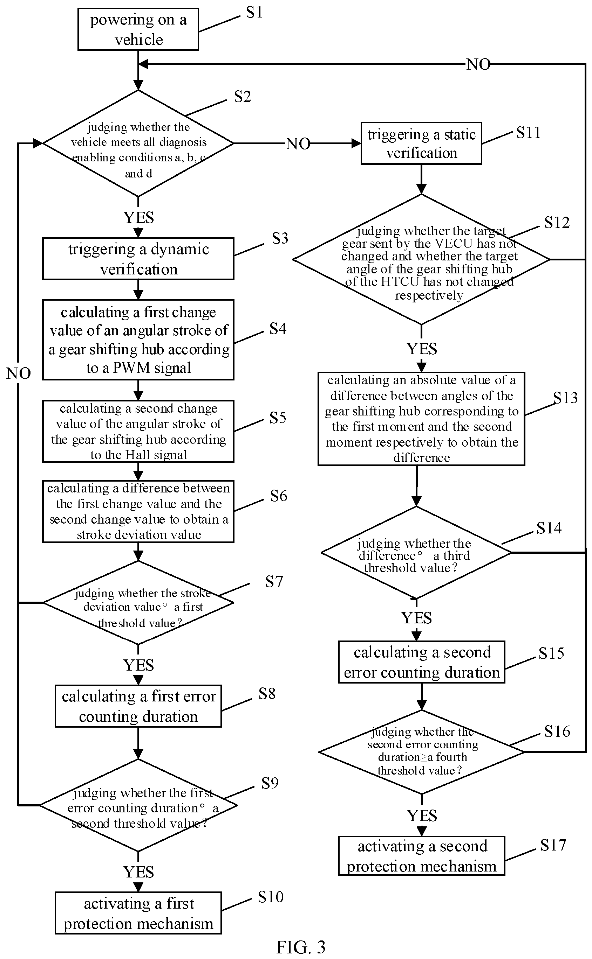

The another method for activating a gear shifting protection mechanism will be described in detail below. As shown in FIG. 3, the method includes the following steps S1 to S17.

Step S1: a vehicle is powered on.

It should be understood that, in the invention, according to hardware characteristics of a gear shifting mechanism of a vehicle, one turn of rotation of the gear shifting motor corresponds to a PWM signal electrical angle of 359° with an angle accuracy of 1°. A relationship between the angle of the gear shifting hub and the electrical angle of the PWM signal is shown in the following formula (9): 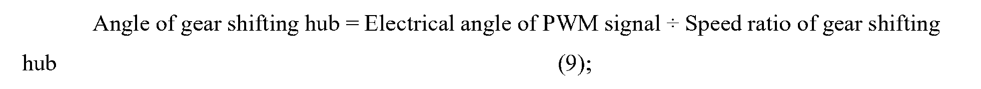 Angle of gear shifting hub = Electrical angle of PWM signal ÷ Speed ratio of gear shifting hub (9);

In addition, the electrical angle of the PWM signal is shown in the following formula (10):
$Electrical angle of PWM signal = Electrical angle of Hall signal \div I$ (10);

Where, i is a count of pole pairs in the gear shifting motor. Generally, a count of pole pairs is set to be 4, then the Hall signal correspondingly has 24 upper and lower edges with an angle accuracy of 15°.

In Step S2, whether the vehicle meets all diagnosis enabling conditions a, b, c and d is judged, if all a, b, c and d are met, step S3 is executed; otherwise, step S11 is executed.

It should be understood that the enabling condition a is that the target angle of the gear shifting hub of the HTCU changes; the enabling condition b is that the PWM signal is valid; the enabling condition c is that the Hall signal is valid; the enabling condition d is that the 5 Volt (V) power supply is normal. Optionally, a manner for judging whether the 5V power supply is normal may include: reading a detected voltage value of the 5V power supply, if the detected voltage value < a voltage threshold (determined by a working range of sensor, for example, 4V), starting to calculate a count of voltage errors p =p + 1 times (if p is not continuously increased, a count of error is cleared to be zero), if a cumulative duration corresponding to the count of voltage errors p*T (T is a cycle of diagnosis) ≥ the preset duration (which can be determined by a whole vehicle test, for example, 300 ms), then outputting a fault of the 5V power supply. In addition, a judgment of the enabling condition b and the enabling condition c must be performed in a condition that the vehicle is supplied with a voltage of 5V power supply. Optionally, a method for judgment of the enabling condition b and the enabling condition c may refer to the description of above steps S121 to S124 and above steps S125 to S128, which will not be repeated here.

In Step S3: a dynamic verification is triggered.

It should be understood that the dynamic verification (i.e., the above first verification) is to verify a position of a gear shifting hub during a gear shifting process of the vehicle.

In Step S4: a first change value of an angular stroke of a gear shifting hub according to a PWM signal is calculated.

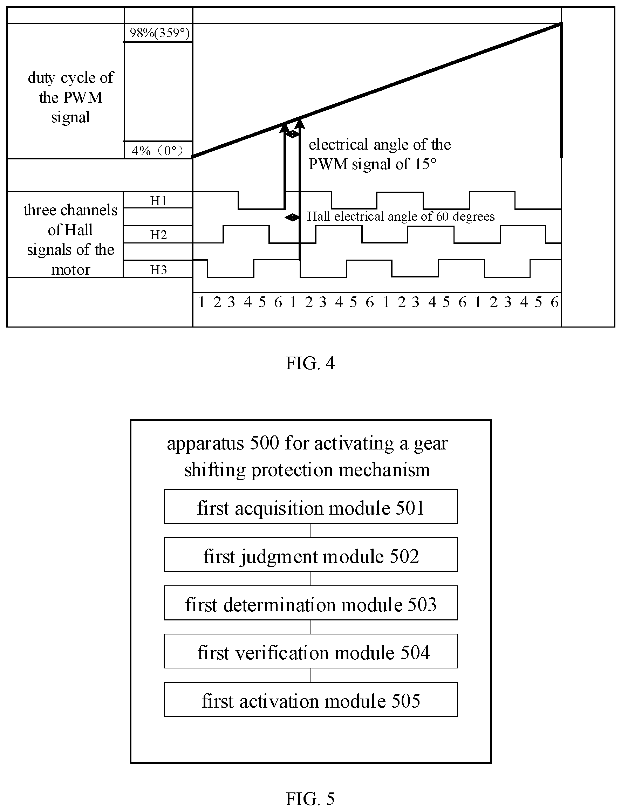

The embodiment of the invention provides a corresponding relationship between the PWM signal and the Hall signal. As shown in FIG. 4, the gear shifting motor includes three Hall signals, which are H1, H2 and H3, respectively; a duty cycle of the PWM signal is 4% - 98%, and an electrical angle of the PWM signal ranges from 0-359 degrees. The PWM signal is sampled at two Hall edges (i.e., corresponding to the electrical angle of the Hall signal of 60 degrees and 15 degrees respectively, in FIG. 4) to accumulate a stroke value. A horizontal axis in FIG. 4 represents 24 edges of the Hall signal. A calculation formula for the accumulated first change value of the angular stroke of the gear shifting hub calculated through the PWM signal refers to the above formula (1).

In Step S5, a second change value of the angular stroke of the gear shifting hub according to the Hall signal is calculated.

The Hall signal is sampled at two Hall edges to accumulate stroke value, where the accumulated second change value of the angular stroke of the gear shifting hub calculated through the Hall signal refers to the above formula (4).

In Step S6, a difference between the first change value and the second change value is calculated to obtain a stroke deviation value.

By using the first change value and the second change value for verification, errors between the first change value and the second change value at the two Hall edges are calculated within a monotonic interval.

In Step S7, whether the stroke deviation value is greater than or equal to a first threshold value is judged, if the stroke deviation value is greater than or equal to a first threshold value, step S8 is executed; otherwise, step S2 is executed.

In Step S8, a first error counting duration (i.e., the first cumulative duration corresponding to the count of occurrences of the first erroneous position above) is calculated.

In Step S9, whether the first error counting duration is greater than or equal to a second threshold value is judged, if the first error counting duration is greater than or equal to a second threshold value, step S10 is executed; otherwise, step S2 is executed.

In Step S10, a first protection mechanism is activated.

During a gear shifting process, if errors occur continuously in the position of the gear shifting hub within a continuous time period, and a cumulative duration of occurrences of the errors is greater than or equal to a preset duration (for example, 200 ms), it indicates that the position of the gear shifting hub is unreliable. A first protection mechanism is activated. The gear shifting motor is turned off immediately, and a request is made to the entire vehicle to cut off power.

In Step S11, a static verification is triggered.

It should be understood that the static verification (i.e., the above second verification) is to verify the position of the gear shifting hub by the gear shifting mechanism when the vehicle is not shifting gears.

In Step S12, whether the target gear sent by the VECU has not changed and whether the target angle of the gear shifting hub of the HTCU has not changed respectively (i.e., judging whether the target gear is the same as a current gear and whether the target angle value of the gear shifting hub is the same as a current angle value of the gear shifting hub) are judged, if the target gear sent by the VECU has not changed and the target angle of the gear shifting hub of the HTCU has not changed, step S13 is executed; otherwise, step S2 is executed.

In Step S13, an absolute value of a difference between angles of the gear shifting hub respectively corresponding to the first moment and the second moment are calculated to obtain the difference.

Here, the first moment and the second moment are differed by one cycle. For example, the difference may be an absolute value of a difference between the angle of the gear shifting hub calculated through the PWM signal at moment t and the angle of the gear shifting hub calculated through the PWM signal at time (t+T).

In Step S14, whether the difference is greater than or equal to a third threshold value is judged, if the difference is greater than or equal to the third threshold value, step S15 is executed; otherwise, step S2 is executed.

In Step S15, a second error counting duration (i.e., the second cumulative duration corresponding to the count of occurrences of the second erroneous position above) is calculated.

In Step S16, whether the second error counting duration is greater than or equal to a fourth threshold value is judged, if the second error counting duration is greater than or equal to the fourth threshold value, step S17 is executed; otherwise, step S2 is executed.

In Step S17, a second protection mechanism is activated.

Before a gear shift, if errors occur continuously in the position of the gear shifting hub within a continuous time period, and the cumulative duration of the count of error occurrences is greater than or equal to a preset duration (for example, 500ms), it indicates that the position of the gear shifting hub is unreliable. A second protection mechanism is activated. The gear shifting motor is turned off immediately, a gear shifting is prohibited, and the VECU no longer sends a gear shifting request.

Compared with the related art, the embodiments of the invention have the following advantages.
1. During the gear shifting process, according to the cycle calculated through the Hall signal, the first change value of the angular stroke of the gear shifting hub calculated through the Hall signal and the second change value of the angular stroke of the gear shifting hub calculated through the PWM signal are mutually verified. thereby increasing reliability of gear shifting, avoiding a verification error caused by an accumulation of positional errors or by an unchanged upper or lower edge of the Hall signal when the gear shifting motor changes direction, and increasing reliability of verification.
2. When no gear shifting is performed, a position verification is performed through the target gear, the change value of the angle of the gear shifting hub and the change value of the position of the gear shifting hub, thereby identifying an error of the position of the gear shifting hub in advance, and performing an intervention in advance to protect the gear shifting mechanism.
3. According to the carrier frequency signal of the PWM pulse width modulation sensor and the PWM duty cycle signal, the validity of the PWM signal is judged, thereby avoiding the error of the PWM signal caused by line faults and ensuring the correct input of the signal for verification.
4. According to the Hall signal of the Hall sensor, the error of the Hall signal caused by line faults is avoided, and thus the validity of the Hall signal is judged, to ensure the correct input of the signal for verification.
5. A 5V power supply signal is monitored to avoid the error of the PWM signal or the Hall signal caused by an unstable power supply voltage, and ensure the correct input of the signal for verification.

An embodiment of the invention provides an apparatus for activating a gear shifting protection mechanism. As shown in FIG. 5, the apparatus 500 for activating a gear shifting protection mechanism includes:
a first acquisition module 501, configured for acquiring a Pulse Width Modulation signal of a gear shifting motor and a Hall signal of the gear shifting motor.
a first judgment module 502, configured for judging whether the Pulse Width Modulation signal is valid and judging whether the Hall signal is valid, respectively.
a first determination module 503, configured for, in a condition that both the Pulse Width Modulation signal and the Hall signal are valid, determining a first change value of an angular stroke of a gear shifting hub based on the Pulse Width Modulation signal; and determining a second change value of the angular stroke of the gear shifting hub based on the Hall signal.
a first verification module 504, configured for performing, based on the first change value and the second change value, a first verification on a position of the gear shifting hub to obtain a first verification result.
a first activation module 505, configured for activating, in a condition that the first verification result is unqualified, a first protection mechanism; the first protection mechanism being used to turn off the gear shifting motor of a vehicle and cut off a power output of the vehicle.

In some embodiments, the first verification module 504 includes: a first calculation sub-module, configured for calculating a difference between the first change value and the second change value to obtain a stroke deviation value; a first determination sub-module, configured for determining, in a condition that the stroke deviation value is greater than or equal to a first threshold value, that the position of the gear shifting hub is a first erroneous position; a second determination sub-module, configured for determining the count of occurrences of the first erroneous position, and determining a first cumulative duration corresponding to the count of occurrences of the first erroneous position; a third determination sub-module, configured for determining, in a condition that the first cumulative duration is greater than or equal to a second threshold value, that the first verification result is unqualified.

In some embodiments, the apparatus 500 for activating a gear shifting protection mechanism further includes: a second determination module, configured for determining, in a condition that the Pulse Width Modulation signal and/or the Hall signal are invalid, a difference between a first angle value of the gear shifting hub at a first moment and a second angle value of the gear shifting hub at a second moment; the first moment and the second moment being differed by one cycle; a second verification module, configured performing, based on the difference, a second verification on the position of the gear shifting hub to obtain a second verification result; a second activation module, configured for activating, in a condition that the second verification result is unqualified, a second protection mechanism; the second protection mechanism being used to make a vehicle turn off the gear shifting motor and make a gear shifting request no longer be sent.

In some embodiments, the second determination module further includes: a receiving sub-module, configured for receiving a gear shifting instruction sent by a Vehicle Electronic Control Unit of the vehicle; the gear shifting instruction including a target gear and a target angle value of the gear shifting hub; a judgment sub-module, configured for respectively judging whether the target gear is the same as a current gear of the vehicle, and whether the target angle value of the gear shifting hub is the same as a current angle value of the gear shifting hub in the Hybrid Transmission Control Unit; a first acquisition sub-module, configured for acquiring, in a condition that the target gear is the same as the current gear and the target angle value of the gear shifting hub is the same as the current angle value of the gear shifting hub, the first angle value and the second angle value.

In some embodiments, the second verification module includes: a fourth determination sub-module, configured for determining, in a condition that the difference is greater than a third threshold value, that the position of the gear shifting hub is a second erroneous position; a fifth determination sub-module, configured for determining the count of occurrences of the second erroneous position, and determining a second cumulative duration corresponding to the count of occurrences of the second erroneous position; a sixth determination sub-module, configured for determining, in a condition that the second cumulative duration is greater than or equal to a fourth threshold value, that the second verification result is unqualified.

In some embodiments, the first judgment module includes: a seventh determination sub-module, configured for determining parameter values of characteristic signals in the Pulse Width Modulation signal; the characteristic signals including a carrier frequency signal and/or a duty cycle signal; an eighth determination sub-module, configured for determining, based on a relationship between the parameter value and a corresponding preset threshold value, an erroneous Pulse Width Modulation signal; a ninth determination sub-module, configured for determining the count of occurrences of the erroneous Pulse Width Modulation signal, and determining a third cumulative duration corresponding to the count of occurrences of the erroneous Pulse Width Modulation signal; a tenth determination sub-module, configured for determining, based on a relationship between the third cumulative duration and a fifth threshold value,whether the Pulse Width Modulation signal is valid.

In some embodiments, the first judgment module further includes: a second acquisition sub-module, configured for acquiring a phase and/or an encoding sequence of the Hall signal; an eleventh determination sub-module, configured for determining, based on the phase and/or the encoding sequence, an erroneous Hall signal; a twelfth determination sub-module, configured for determining the count of occurrences of the erroneous Hall signal, and determining a fourth cumulative duration corresponding to the count of occurrences of the erroneous Hall signal; a thirteenth determination sub-module, configured for determining whether the Hall signal is valid based on a relationship between the fourth cumulative duration and a sixth threshold value.

The description of the above embodiments of the apparatus for activating a gear shifting protection mechanism is similar to the description of the above embodiments of the method for activating a gear shifting protection mechanism, and has similar beneficial effects as the method embodiments. In some embodiments, the functions or included modules of the apparatus for activating a gear shifting protection mechanism provided in the embodiments of the invention can be used to perform the methods described in the above embodiments of the method for activating a gear shifting protection mechanism. For technical details not disclosed in the apparatus embodiments of the invention, please refer to the description of the method embodiments for activating a gear shifting protection mechanism of the invention for understanding.

It should be noted that, in the embodiments of the invention, if the above method for activating a gear shifting protection mechanism is implemented in the form of a software functional module and sold or used as an independent product, it may also be stored in a computer-readable storage medium. Based on this understanding, the technical solutions of the embodiments of the invention essentially or the part contributing to the related art may be embodied in the form of a software product. The software product is stored in a storage medium and includes several instructions to enable a vehicle to execute all or a portion of the method for activating a gear shifting protection mechanism described in various embodiments of the invention. The foregoing storage medium includes: a U disk, a mobile hard disk, a Read Only Memory (ROM), a magnetic disk, or an optical disk, and other media that can store program codes. In this way, the embodiments of the invention are not limited to any specific hardware, software, or firmware, or any combination of hardware, software, and firmware.

An embodiment of the invention provides a device for activating a gear shifting protection mechanism, including a memory and a controller. The memory stores a computer program executable on the controller. The controller, when executing the program, implements some or all of the steps in the above method for activating a gear shifting protection mechanism.

An embodiment of the invention provides a computer-readable storage medium having a computer program stored thereon. The computer program, when executed by a controller, implements some or all of the steps in the above method for activating a gear shifting protection mechanism. The computer-readable storage medium may be transitory or non-transitory.

An embodiment of the invention provides a computer program, including computer-readable code. In a condition that the computer-readable code runs in a vehicle, a controller in the vehicle executes steps for implementing a portion or all of the above method for activating a gear shifting protection mechanism.

An embodiment of the invention provides a computer program product. The computer program product includes a non-transitory computer-readable storage medium storing a computer program. The computer program, when read and executed by a computer, implements some or all of the steps in the above method for activating a gear shifting protection mechanism. The computer program product may be specifically implemented by hardware, software, or a combination thereof. In some embodiments, the computer program product is specifically embodied as a computer storage medium. In other embodiments, the computer program product is specifically embodied as a software product, such as a Software Development Kit (SDK), etc.

It should be noted here that the description of the various embodiments above tends to emphasize the differences between the various embodiments, and the same or similar parts may be referred to each other. The description of the above device, storage medium, computer program, and computer program product embodiments is similar to the description of the above method embodiments for activating a gear shifting protection mechanism, and has similar beneficial effects as the method embodiments. For technical details not disclosed in the device, storage medium, computer program, and computer program product embodiments of the invention, please refer to the description of the method embodiments for activating a gear shifting protection mechanism of the invention for understanding.

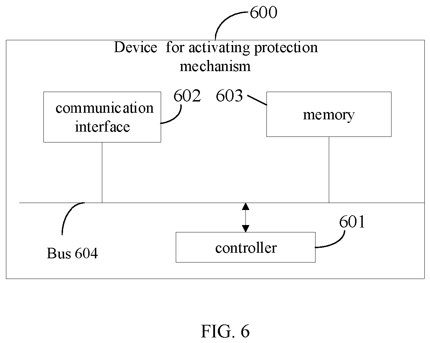

It should be noted that an embodiment of the present application provides a hardware entity of a device for activating a gear shifting protection mechanism. As shown in FIG. 6, the hardware entity of the device 600 for activating a gear shifting protection mechanism includes: a controller 601, a communication interface 602, and a memory 603. The controller 601 generally controls the overall operation of the device 600 for activating a gear shifting protection mechanism. The communication interface 602 can enable the device 600 for activating the gear shifting protection mechanism to communicate with other terminals or servers via a network. The memory 603 is configured to store instructions and applications executable by the controller 601, and can also cache data to be processed or already processed by the controller 601 and various modules in the device 600 for activating a gear shifting protection mechanism (for example, image data, audio data, voice communication data and video communication data), which can be implemented by a FLASH memory or a Random Access Memory (RAM). The controller 601, the communication interface 602, and the memory 603 can perform data transmission via a bus 604.

It should be understood that reference throughout the specification to "one embodiment" or "an embodiment" means that a particular feature, structure, or characteristic related to the embodiment is included in at least one embodiment of the invention. Thus, the appearances of the phrases "in one embodiment" or "in an embodiment" in various places throughout the specification are not necessarily all referring to the same embodiment. Furthermore, these particular features, structures, or characteristics may be combined in any suitable manner in one or more embodiments. It should be understood that, in various embodiments of the invention, the size of the sequence numbers of the above steps/processes does not mean the execution order. The execution order of each step/process should be determined by its function and internal logic, and should not constitute any limitation on the implementation process of the embodiments of the invention. The serial numbers of the above embodiments of the invention are only for description, and do not represent the advantages and disadvantages of the embodiments.

It should be noted that, in this document, the terms "comprise", "include" or any other variation thereof are intended to cover a non-exclusive inclusion, so that a process, method, article or apparatus including a series of elements includes not only those elements, but also other elements not explicitly listed, or elements inherent to such a process, method, article or apparatus. Without more limitations, the element defined by the phrase "including a ..." does not exclude the presence of another identical element in the process, method, article or apparatus including the element.

In the several embodiments provided in the invention, it should be understood that the disclosed device and method may be implemented in other ways. The device embodiments described above are only illustrative. For example, the division of the units is only a logical function division, and there may be other division manners in actual implementation, such as: multiple units or components may be combined, or may be integrated into another system, or some features may be ignored, or not implemented. In addition, the coupling, direct coupling or communication connection between the various components shown or discussed may be indirect coupling or communication connection through some interfaces, devices or units, and may be electrical, mechanical or other forms.

The units described as separate components may or may not be physically separated, and the components shown as units may or may not be physical units; they may be located in one place, or distributed on multiple network units; part or all of the units may be selected according to actual needs to achieve the purpose of the solution of this embodiment.

In addition, each functional unit in each embodiment of the invention may be integrated into one processing unit, or each unit may be separately used as one unit, or two or more units may be integrated into one unit; the above integrated units may be implemented in the form of hardware, or in the form of hardware plus software function units.

Those of ordinary skill in the art can understand that all or part of the steps of the above method embodiments may be implemented by hardware related to program instructions. The foregoing program may be stored in a computer-readable storage medium, and when the program is executed, the steps including the above method embodiments are executed. The foregoing storage medium includes: a mobile storage device, a Read Only Memory (ROM), a magnetic disk, or an optical disk, and other media that can store program codes.

Alternatively, if the above integrated units of the invention are implemented in the form of software function modules and sold or used as independent products, they may also be stored in a computer-readable storage medium. Based on such an understanding, the technical solutions of the invention essentially or the part contributing to the related art may be embodied in the form of a software product. The computer software product is stored in a storage medium and includes several instructions to enable a vehicle to execute all or part of the methods described in each embodiment of the invention. The foregoing storage medium includes: a mobile storage device, a ROM, a magnetic disk, or an optical disk, and other media that can store program codes.

The above is only the embodiment of the invention, and the protection scope of the invention is not limited thereto. Any person skilled in the art can easily think of changes or substitutions within the technical scope disclosed in the invention, and all of them shall be covered within the protection scope of the invention.

## Claims

1. A method for activating a gear shifting protection mechanism, applied to an electronic device of a vehicle, the method comprising:
acquiring a Pulse Width Modulation signal of a gear shifting motor and a Hall signal of a gear shifting motor;
judging whether the Pulse Width Modulation signal is valid and judging whether the Hall signal is valid, respectively;
in a condition that both the Pulse Width Modulation signal and the Hall signal are valid, determining a first change value of an angular stroke of a gear shifting hub based on the Pulse Width Modulation signal, and determining a second change value of the angular stroke of the gear shifting hub based on the Hall signal;
performing, based on the first change value and the second change value, a first verification on a position of the gear shifting hub to obtain a first verification result.
activating, in a condition that the first verification result is unqualified, a first protection mechanism, the first protection mechanism being used to turn off the gear shifting motor of a vehicle and cut off a power output of the vehicle.

2. The method according to claim 1, wherein the performing, based on the first change value and the second change value, a first verification on the position of the gear shifting hub to obtain the first verification result, comprises:
calculating a difference between the first change value and the second change value to obtain a stroke deviation value;
determining, in a condition that the stroke deviation value is greater than or equal to a first threshold value, that the position of the gear shifting hub is a first erroneous position;
determining a count of occurrences of the first erroneous position, and determining a first cumulative duration corresponding to the count of occurrences of the first erroneous position;
determining, in a condition that the first cumulative duration is greater than or equal to a second threshold value, that the first verification result is unqualified.

3. The method according to claim 1, wherein the method further comprises:
determining, in a condition that the Pulse Width Modulation signal and/or the Hall signal is/are invalid, a difference between a first angle value of the gear shifting hub at a first moment and a second angle value of the gear shifting hub at a second moment, the first moment and the second moment being differed by one cycle;
performing, based on the difference, a second verification on the position of the gear shifting hub to obtain a second verification result.
activating, in a condition that the second verification result is unqualified, a second protection mechanism; the second protection mechanism being used to make a vehicle turn off the gear shifting motor and make a gear shifting request no longer be sent.

4. The method according to claim 3, wherein the method further comprises:
receiving a gear shifting instruction sent by a Vehicle Electronic Control Unit of the vehicle; the gear shifting instruction comprising a target gear and a target angle value of the gear shifting hub;
respectively judging whether the target gear is the same as a current gear of the vehicle, and whether the target angle value of the gear shifting hub is the same as a current angle value of the gear shifting hub in a Hybrid Transmission Control Unit;
acquiring, in a condition that the target gear is the same as the current gear and the target angle value of the gear shifting hub is the same as the current angle value of the gear shifting hub, the first angle value and the second angle value.

5. The method according to claim 3, wherein the performing, based on the difference, the second verification on the position of the gear shifting hub to obtain the second verification result, comprises:
determining, in a condition that the difference is greater than or equal to a third threshold value, that the position of the gear shifting hub is a second erroneous position;
determining a count of occurrences of the second erroneous position, and determining a second cumulative duration corresponding to the count of occurrences of the second erroneous position;
determining, in a condition that the second cumulative duration is greater than or equal to a fourth threshold value, that the second verification result is unqualified.

6. The method according to any one of claims 1 to 5, wherein the judging whether the Pulse Width Modulation signal is valid, comprises:
determining a parameter value of a characteristic signal in the Pulse Width Modulation signal; the characteristic signal comprising a carrier frequency signal and/or a duty cycle signal;
determining, based on a relationship between the parameter value and a corresponding preset threshold value, an erroneous Pulse Width Modulation signal;
determining a count of occurrences of the erroneous Pulse Width Modulation signal, and determining a third cumulative duration corresponding to the count of occurrences of the erroneous Pulse Width Modulation signal;
determining, based on a relationship between the third cumulative duration and a fifth threshold value, whether the Pulse Width Modulation signal is valid.

7. The method according to any one of claims 1 to 5, wherein the judging whether the Hall signal is valid, comprises:
acquiring a phase and/or an encoding sequence of the Hall signal;
determining, based on the phase and/or the encoding sequence, an erroneous Hall signal;
determining a count of occurrences of the erroneous Hall signal, and determining a fourth cumulative duration corresponding to the count of occurrences of the erroneous Hall signal;
determining whether the Hall signal is valid based on a relationship between the fourth cumulative duration and a sixth threshold value.

8. An apparatus for activating a gear shifting protection mechanism, the apparatus comprising:
a first acquisition module, configured for acquiring a Pulse Width Modulation signal of a gear shifting motor and a Hall signal of the gear shifting motor;
a first judgment module, configured for judging whether the Pulse Width Modulation signal is valid and judging whether the Hall signal is valid, respectively;
a first determination module, configured for, in a condition that both the Pulse Width Modulation signal and the Hall signal are valid, determining a first change value of an angular stroke of a gear shifting hub based on the Pulse Width Modulation signal, and determining a second change value of the angular stroke of the gear shifting hub based on the Hall signal;
a first verification module, configured for performing, based on the first change value and the second change value, a first verification on a position of the gear shifting hub to obtain a first verification result;
a first activation module, configured for activating, in a condition that the first verification result is unqualified, a first protection mechanism; the first protection mechanism being used to turn off the gear shifting motor of a vehicle and cut off a power output of the vehicle.

9. A device for activating a gear shifting protection mechanism, comprising a memory and a controller, wherein the memory stores a computer program executable on the controller, wherein the controller, when executing the computer program, implements steps of the method according to any one of claims 1 to 7.

10. A computer-readable storage medium having a computer program stored thereon, wherein the computer program, when executed by a processor, implements steps of the method according to any one of claims 1 to 7.
